# EUROPEAN PATENT APPLICATION

(11) **EP 2 484 514 A1**
(43) Date of publication of application: **08.08.2012**
(21) Application number: 12154486.0
(22) Date of filing: 08.02.2012
(51) Int. Cl.: B29C 70/24, B29C 70/32

(54) **Composite article, method and equipment therefor**

(30) Priority: 08.02.2011 US 201113023020
(71) Applicant: Pratt & Whitney Rocketdyne Inc., Canoga Park, CA 91309 (US)
(72) Inventor: Mcenerney, Bryan William, Canoga Park, CA California 91309 (US); Stout, Jeffrey B., Canoga Park, CA California 91309 (US)
(74) Representative: Leckey, David Herbert

(57) **Abstract**

A method for use in the manufacturing of a composite article includes wrapping a first fiber sheet (28) around a mandrel (42) that includes a plurality of needles (44) that extends therefrom such that the plurality of needles (44) pass through the first fiber sheet (28). The first fiber sheet (28) includes a plurality of fibers (26a) and a plurality of interstitial areas (27) and all of the plurality of fibers (26a) in the first sheet (28) is intact. A second fiber sheet (28) is wrapped around the mandrel (42) such that the plurality of needles (44) passes through the second fiber sheet (28). The second fiber sheet (28) includes a plurality of fibers (26a) and a plurality of interstitial areas (27) and all of the plurality of fibers (26a) in the second sheet (28) is intact. The fiber sheets (28) are impregnated with a resin while the sheets (28) are on the mandrel (42).

## Description

### BACKGROUND

This disclosure relates to a method for use in the manufacturing of a fiber reinforced composite article.

Composite materials are used as a replacement to heavier, metallic alloys. The use of composite materials, especially oriented fiber composites, is limited though by the design requirements of the end use application and also the available composite processing techniques. For instance, the manufacturing of an oriented fiber composite typically involves laying-up sheets or layers of dry or pre-impregnated fibers, consolidating the stack of laid-up sheets and impregnating the fibers with the matrix material. Thus, the shape of the article and orientation of the fibers within the article is limited by how the fiber layers can be stacked in the lay-up process. Furthermore, the handling of the fiber sheets and laid-up stack during processing can disturb or damage the fibers to the detriment of the final article.

### SUMMARY

According to a first aspect of the invention there is provided a wall comprising a first sheet including a plurality of fibers and a plurality of interstitial areas, a second sheet including a plurality of fibers and a plurality of interstitial areas and a reinforcing member disposed though one of the plurality of interstitial areas of the first sheet and one of the plurality of interstitial areas of the second sheet, wherein the plurality of fibers are intact.

According to a second aspect of the invention there is provided method for use in the manufacturing of a composite article, the method comprising wrapping a fiber layer around a mandrel and while the fiber layer is on the mandrel, threading a plurality of fibers through a radially inner side of the fiber layer to the radially outer side of the fiber layer.

The threading of the plurality of fibers may include pulling a respective plurality of needles out from the mandrel to thread the plurality of fibers through the fiber layer.

The fiber layer may be wrapped such that a plurality of needles that extend from the mandrel pass through the fiber layer.

A plurality of needles that extend from the mandrel through the fiber layer may be extended an incremental amount in response to a revolution of the mandrel.

From a further ascpect the invention provides a method for use in the manufacturing of a composite article, the method comprising wrapping a first fiber sheet around a mandrel that includes a plurality of needles that extends therefrom such that the plurality of needles pass through the first fiber sheet, wherein the first fiber sheet includes a plurality of fibers and a plurality of interstitial areas and all of the plurality of fibers in the first sheet are intact and wrapping a second fiber sheet around the mandrel such that the plurality of needles pass through the second fiber sheet, wherein the second fiber sheet includes a plurality of fibers and a plurality of interstitial areas and all of the plurality of fibers in the second sheet are intact.

The plurality of needles may thread a respective plurality of fibers through the wrapped fiber sheets.

The plurality of fibers may be threaded from a radially inner side of the wrapped fiber sheets to a radially outer side of the wrapped fiber sheets.

The plurality of needles may be pulled out from the mandrel to thread a plurality of fibers through the wrapped fiber sheets.

The needles may be curved.

The wrapped fiber layer or sheets may be impregnated with a resin while the fiber layer or sheets are on the mandrel.

The plurality of needles that extend from the mandrel through the fiber layer may be extended an incremental amount in response to a revolution of the mandrel.

From a further aspect the invention provides an apparatus for use in the manufacturing of a composite article, the apparatus comprising a mandrel for receiving a fiber layer thereon, the mandrel including a plurality of needles that extend therefrom.

### BRIEF DESCRIPTION OF THE DRAWINGS

The various features and advantages of the disclosed examples will become apparent to those skilled in the art from the following detailed description. The drawings that accompany the detailed description can be briefly described as follows.
Figure 1 illustrates an example composite article.
Figure 2 illustrates an apparatus for use in the manufacturing of a composite article.
Figure 3 illustrates an axial view of the apparatus of Figure 2.
Figure 4 illustrates the apparatus of Figure 2 with a fiber layer wrapped thereon.
Figure 5 illustrates an axial view of the apparatus of Figure 4.
Figure 6 illustrates a needle of the apparatus of Figure 2 that extends through the fiber layers wrapped thereon.
Figure 7 illustrates the removal of the needle of Figure 6.
Figure 8 illustrates another example of an apparatus for the manufacturing of a composite article, which includes curved needles.
Figure 9 illustrates an example of incremental movement of a needle of an apparatus for the manufacturing of a composite article.

### DETAILED DESCRIPTION OF THE PREFERRED EMBODIMENT

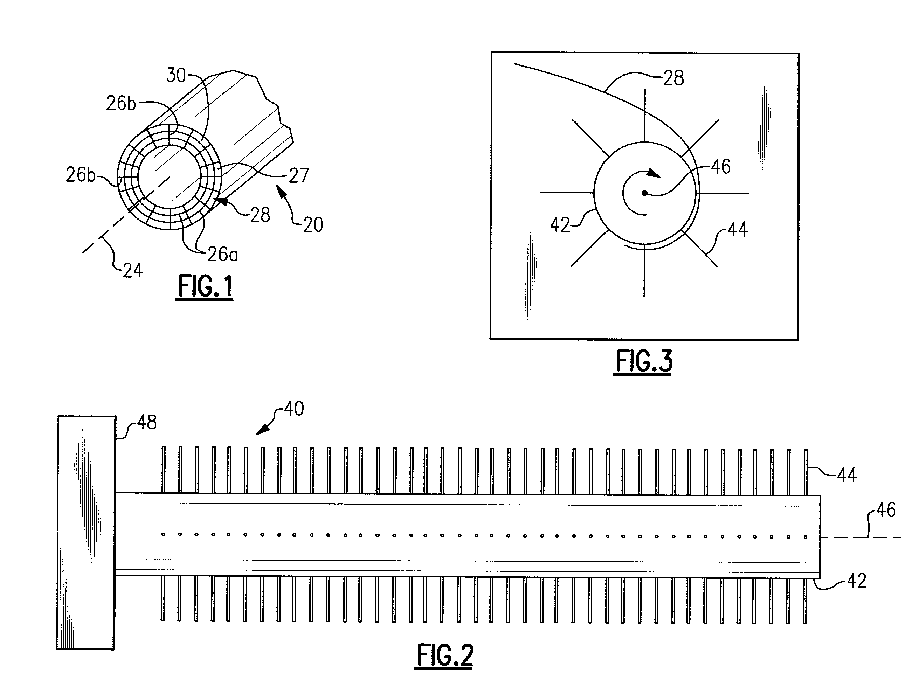

Figure 1 schematically illustrates selected portions of an example composite article 20. The composite article 20 generally has a tubular structure that extends around a central axis 24. Although shown as cylindrical, the tubular structure may be formed in other shapes that are appropriate for the particular end use. For instance, the composite article 20 may be a housing of an aircraft or aerospace component, a thrust chamber, a nozzle, a duct, a manifold, or any other structure that generally has a composite wall.

As illustrated, the composite article 20 includes first fibers 26a that generally extend circumferentially around the central axis 24 and second fibers 26b (reinforcing members) that extend radially with regard to the central axis 24 to form a wall. There are interstitial areas 27 between the first fibers 26a. The first fibers 26a are arranged in fiber sheets or layers 28 that extend circumferentially around the central axis 24. The second fibers 26b extend radially through the fiber layers 28 in at least a portion of the interstitial areas 27, such that the all of the first fiber 26a are intact with regard to any fiber fractures. Additionally, the first fibers 26a may be intact with regard to fiber orientation such that the second fibers 26b do not displace the first fibers 26a to cause bends or deviations on orientation to accommodate the second fibers 26b in the interstitial areas 27. The first fibers 26a and the second fibers 26b are shown schematically and the spacing between the fibers and layers is exaggerated in the drawings for the purpose of visual clarity.

The first fibers 26a and the second fibers 26b in the composite article 20 are dispersed within a matrix 30. The matrix 30, the first fibers 26 and the second fibers 26b form the body of the composite article 20.

The materials of the first fibers 26a, the second fibers 26b and the matrix 30 are selected based upon the desired properties of the composite article 20. In some examples, the composite article 20 may be a polymer matrix composite. Alternatively, the composite article 20 may be a ceramic matrix composite. In either case, the fibers may be carbon fibers or ceramic fibers, but the use of other kinds of fibers is also contemplated. The ceramic fibers may be silicon carbide fibers.

The polymer of the matrix 30 may be epoxy, phenolic, or other suitable polymeric material for the intended end use of the composite article 20. Alternatively, the matrix 30 may be a ceramic material, such a silicon carbide. In another alternative, the matrix 30 may be carbon. Thus, the end composite article 20 may be carbon fiber/carbon matrix, carbon fiber/ceramic matrix, ceramic fiber/carbon matrix, ceramic fiber/ceramic matrix, carbon fiber/polymer matrix or ceramic fiber/polymer matrix, for example. Given this description, one of ordinary skill will recognize other materials that are suited to their particular needs.

Figure 2 illustrates an example apparatus 40 for carrying out a method for use in the manufacturing of the composite article 20. The apparatus 40 includes a mandrel 42 for receiving the fiber layers 28 thereon. The mandrel 42 includes a plurality of needles 44 that extend therefrom. The needles may be equi-axially and equi-circumferentially spaced on the mandrel 42 (see also Figure 3). The mandrel 42 may be rotatable about its central axis 46 using an actuator 48 to wrap the fiber layer 28 around the mandrel 42, as generally shown in Figure 3.

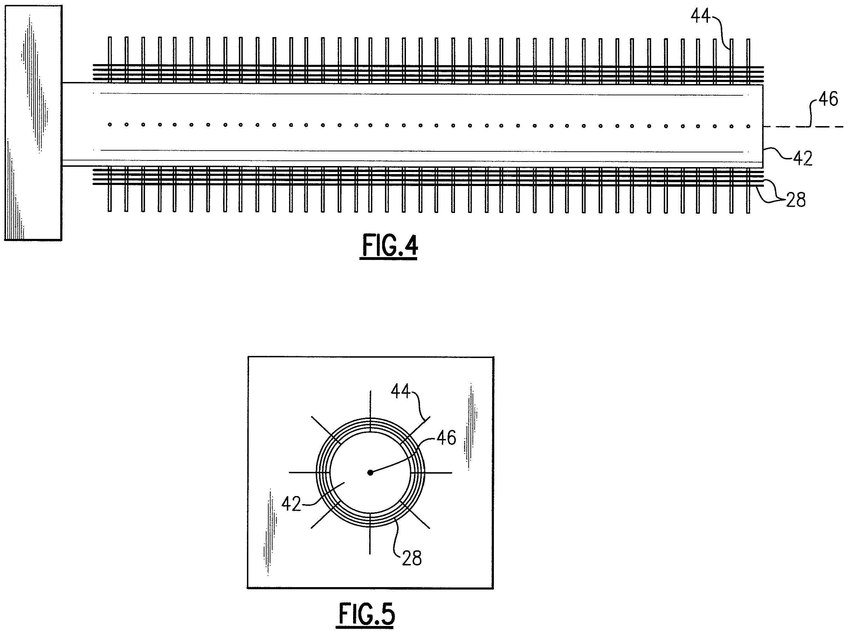

A user wraps the fiber layer 28 around the mandrel 42 such that the plurality of needles 44 passes through the interstitial areas 27 of the fiber layer 28 as it is wrapped. As shown in Figures 4 and 5, multiple passes or revolutions of wrapping the fiber layer 28 around the mandrel 42 may be conducted such that the composite article 20 includes multiple fiber layers. Thus, the additional passes may be regarded as the wrapping of a second fiber sheet or layer 28 on the mandrel 42.

The fiber layer 28 may be a tape that includes oriented or woven fibers. The tape may be pre-impregnated with a resin that is later used to form the matrix 30 of the composite article 20. Alternatively, the tape or fiber layer 28 may be dry with regard to any resin.

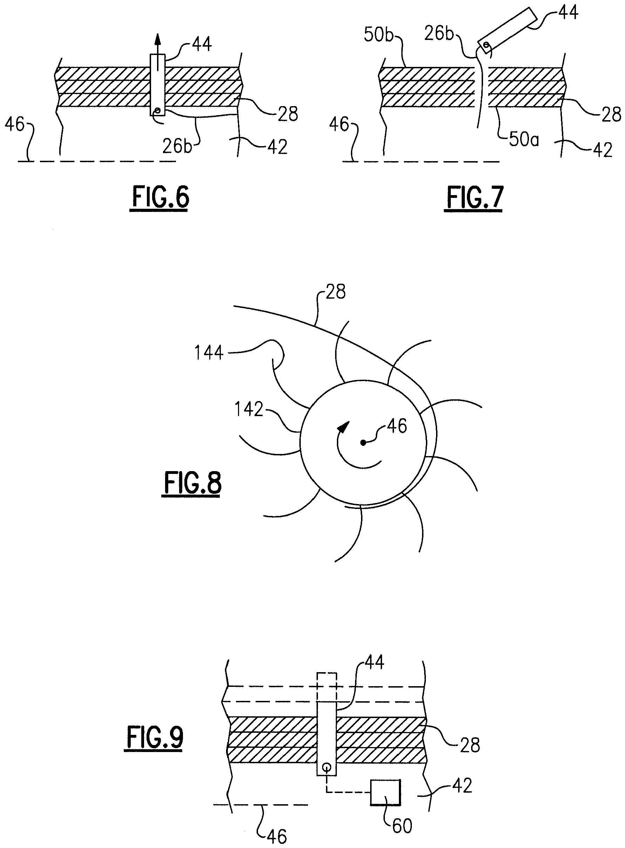

Referring to Figures 6 and 7, upon wrapping a desired number of the fiber layers 28 around the mandrel 42, each of the plurality of needles 44 is pulled out from the mandrel 42. The needles 44 thread the second fibers 26b through the interstitial areas 27 from a radially inner side 50a to the radially outer side 50b of the wrapped fiber layers 28. Once threaded through, the second fibers 26b may be cut free from the needles 44 such that the cut ends drape on the radially outer surface of the fiber layers 28.

The apparatus 40 and method used therewith provide a method for arranging the second fibers 26b with a radial orientation through the fiber layers 28 with little or no disturbance to the first fibers 26a. That is, upon wrapping the fiber layer 28 around the mandrel 42, the needles 44 nestle between the first fibers 26a in the interstitial areas 27 and thereby reduce movement of those fibers to maintain the desired fiber orientation and reduce the possibility of damaging the fibers (i.e., the fibers remain intact).

After threading the second fibers 26b through, the wrapped fiber layers 28 may be further processed to produce the end composite article 20. As an example, if the first fibers 26a are pre-impregnated, the wrapped fiber layers 28 may be thermally treated while remaining on the mandrel 42 to cure the resin. Alternatively, if the first fibers 26a are dry with regard to any resin, the wrapped fiber layers 28 may be impregnated with a resin material. For instance, the resin material may be dip coated onto the wrapped fiber layers 28, sprayed, or resin transfer molded into the first fibers 26a.

After impregnation, the resin may be cured in a known manner before removal of the wrapped fiber layers 28 from the mandrel 42. In an example where the matrix 30 is a ceramic material, the resin may be a pre-ceramic polymer resin that is further thermally treated after curing to convert the pre-ceramic polymer resin to the ceramic material of the matrix 30, such as silicon carbide.

As shown in Figure 8, the apparatus 40 may alternatively include a mandrel 142 that includes curved needles 144. In this case, the curved needles 144 allow the fiber layer 28 to be received onto the mandrel 142 with reduced spreading of the first fibers 26a within the fiber layer 28 during wrapping. For instance, the curved needles 144 maintain an approximately perpendicular angle with regard to the plane of the fiber layer 28 at the location where the needle 144 passes through the fiber layer 28. The perpendicular angle is substantially maintained until the fiber layer 28 moves to the base of the needle 144, which reduces spreading.

Figure 9 illustrates another embodiment in which each of the needles 44 is connected to an actuator 60. As an example, each needle 44 may include its own dedicated actuator 60, or the actuator 60 may be common to multiple needles 44. As an example, the actuator 60 may be a clocking device that mechanically moves the needles 44 an incremental amount upon a rotation of the mandrel 42.

In one example, the actuator 60 moves the needles 44 radially outward with regard to the center axis 46 of the mandrel 42 with each revolution of the mandrel 42. Thus, the free end of the needle 44 remains above the wrapped fiber layers 28 but maintains a relatively short extension beyond the radially outer surface of the wrapped fiber layers 28 to thereby reduce spreading. With each revolution, the needles 44 may be incrementally extended from the mandrel 42. Alternatively, the needles 44 may be extended in response to multiple revolutions of the mandrel 42.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A wall comprising:
a first sheet (28) including a plurality of fibers (26a) and a plurality of interstitial areas (27);
a second sheet (28) including a plurality of fibers (26a) and a plurality of interstitial areas (27); and
a reinforcing member (26b) disposed though one of the plurality of interstitial areas (27) of the first sheet (28) and one of the plurality of interstitial areas (27) of the second sheet (28), wherein the plurality of fibers (26a) are intact.

2. The wall as recited in claim 1, wherein the plurality of fibers (26a) of the first sheet (28) and the second sheet (28) extend around a central axis (24) to form a tubular structure (20), and the reinforcing member (26b) extends radially with regard to the central axis (24).

3. The wall as recited in claim 1 or 2, wherein the reinforcing member (26b) has a different composition than the plurality of fibers (26a) of the first sheet (28) and the second sheet (28), wherein the plurality of fibers (26a) of the first sheet (28) and the second sheet (28) are, for example, selected from a group consisting of carbon fibers, ceramic fibers and combinations thereof.

4. The wall as recited in any preceding claim, wherein the reinforcing member (26b) is a silicon carbide fiber.

5. The wall as recited in any preceding claim, further comprising a ceramic matrix (30), for example silicon carbide, disposed within the interstitial areas (27) of the first sheet (28) and the second sheet (28).

6. A method for use in the manufacturing of a composite article, the method comprising:
wrapping a fiber layer (28) around a mandrel (42); and
while the fiber layer (28) is on the mandrel (42), threading a plurality of fibers (26b) through a radially inner side of the fiber layer (28) to the radially outer side of the fiber layer (28).

7. The method as recited in claim 6, wherein the threading of the plurality of fibers includes pulling a respective plurality of needles (44) out from the mandrel (42) to thread the plurality of fibers (26b) through the fiber layer (28).

8. The method as recited in claim 6 or 7, including wrapping the fiber layer (28) such that a plurality of needles (44) that extend from the mandrel (42) pass through the fiber layer (28).

9. The method as recited in any of claims 6 to 8 comprising:
wrapping a first fiber sheet (28) around the mandrel (42), said mandrel (42) including the or a plurality of needles (44) that extends therefrom such that the plurality of needles (44) pass through the first fiber sheet (28), wherein the first fiber sheet (28) includes a plurality of fibers (26a) and a plurality of interstitial areas (27) and all of the plurality of fibers (26a) in the first sheet (28) are intact; and
wrapping a second fiber sheet (28) around the mandrel (42) such that the plurality of needles (44) pass through the second fiber sheet (28), wherein the second fiber sheet (28) includes a plurality of fibers (26a) and a plurality of interstitial areas (27) and all of the plurality of fibers (26a) in the second sheet (28) are intact.

10. The method as recited in any of claims 7 to 9, wherein the needles (44) are curved.

11. The method as recited in any of claims 6 to 10, further comprising extending a or the plurality of needles (44) out an incremental amount from the mandrel (42) in response to a revolution of the mandrel (42).

12. The method as recited in any of claims 6 to 11, further comprising impregnating the wrapped fiber layer or sheets (28) with a resin while the wrapped fiber layer (28) or sheets (28) is or are on the mandrel (42).

13. An apparatus (40) for use in the manufacturing of a composite article, the apparatus comprising:
a mandrel (42) for receiving a fiber layer (28) thereon, the mandrel (42) including a plurality of needles (44) that extends therefrom.

14. The apparatus as recited in claim 13, wherein the needles are curved, and/or wherein the needles (44) are equi-axially spaced along the mandrel (42), and/or equi-circumferentially spaced around the mandrel (42).

15. The apparatus as recited in claim 13 or 14, wherein the mandrel (42) is cylindrical and/or rotatable.
